# EUROPEAN PATENT APPLICATION

(11) **EP 3 912 869 A1**
(43) Date of publication of application: **24.11.2021**
(21) Application number: 19910566.9
(22) Date of filing: 18.02.2019
(51) Int. Cl.: B60R 25/24, B60R 25/34, B60R 25/10, H01Q 1/32

(54) **VEHICLE SMARTKEY STORAGE SYSTEM FOR CAR SHARING AND CONTROL METHOD THEREFOR**

(30) Priority: 17.01.2019 KR 20190006177
(71) Applicant: Digiparts, Inc., Yongin-si, Gyeonggi-do 16950 (KR)
(72) Inventor: WOO, Hyuk Joon, Yongin-si Gyeonggi-do 16923 (KR); JUNG, Sung Ill, Gyeonggi-do 16876 (KR)
(74) Representative: Viering, Jentschura & Partner mbB Patent- und Rechtsanwälte
(86) International application number: PCT/KR2019/001911
(87) International publication number: WO 2020/149443

(57) **Abstract**

A vehicle smartkey storage system for car sharing comprises: a car sharing min system which is located inside a vehicle so as to generate and transmit or receive a command signal required for car sharing user authentication and car sharing operations; a smartkey storage device which transmits a smartkey operation-related signal to or receives same from the car sharing main system, stores a smartkey, and operates the smartkey according to an operation mechanism, and is shielded to block a radio frequency(RF) signal periodically transmitted from the smartkey; and a signal re-radiation device which is located at a short distance from the smartkey storage device, and re-radiates an RF signal transferred from the smartkey storage device and a low frequency (LF) signal coming from the inside of the vehicle.

## Description

### BACKGROUND

### 1. Technical Field

The present invention relates to a smart key storage system for a car-sharing vehicle and a control method therefor, and more particularly, the vehicle smart key storage system and the control method for blocking communication for recognizing a smart key in the vehicle and allowing only a situation where communication between the vehicle and the smart key are required.

### 2. Discussion of the Related Art

Recently, a car-sharing service, in which a car is shared by unspecified number of people, is spreading rapidly, and the number of car-sharing users and target vehicles is also rapidly increasing.

Car-sharing is a kind of rental car service in which an unspecified number of people rent car for the required amount of time. From the user's point of view, the biggest difference from a normal rental car is that, without having to face the vehicle owner or car sharing service provider, the vehicle to be used is reserved using smart phone application, and the vehicle door is opened and started the vehicle operation with a smart phone application without a vehicle key.

Due to the characteristics of car sharing service as described above, it is impossible to exchange smart keys because many unspecified users use the vehicle without confronting the service provider. Also, to control the vehicle door with the smart phone, a door lock, a horn, and light, etc. are equipped with a vehicle control device for remote control, and the smart key for the vehicle is usually stored in the vehicle.

Due to the status that the smart key is stored the vehicle, when the user finishes using the vehicle in the car-sharing service and try to lock the vehicle door with the smart phone application, the vehicle door cannot be locked because the smart key is stored inside of the vehicle.

In order to solve this problem, the vehicle control device for car-sharing service that is currently used is implemented by dissembling the smart key and connecting the power wiring, and applying power to the smart key as needed.

That is, in normal times, the car-sharing vehicle control device keeps the smart key power off, to prevent unauthorized vehicle use. When an authenticated car-sharing user normally controls the vehicle through the smart phone application, the vehicle control device applies power to the smart key to enable normal use.

The above-described method of installing the smart key in the vehicle has the following problems.

In order to link the smart key with the vehicle control device, the smart key must be disassembled. It may be cumbersome to wire the smart key circuit and the vehicle control device by soldering or the like.

Depending on the vehicle, it cannot be applied to the smart key that cannot be disassembled. In some cases, the disassembled smart key cannot be restored to its original state.

In order to apply the vehicle to which the smart key that cannot be disassembled or cannot be restored to its original state is applied to the vehicle control device, it is necessary to change the wiring of the vehicle's ignition or smart key recognition circuit. Since these wirings are different for each vehicle, it is difficult to apply them universally.

Therefore, there is a need for an apparatus and method to solve all these problems.

Therefore, the present invention has been devised to solve the above problems, and the technical problem to be solved by the present invention is to completely block the communication for recognizing the smart key of the car-sharing vehicle and to allow only the situation where communication between the vehicle and the smart key is required.

In addition, in case of an unauthorized car-sharing user, a RF command signal of the smart key is not recognized in the vehicle due to a smart key storage device that blocks the RF command signal of the smart key, so that the door lock is not released. In case of an authorized car sharing user, the door lock can be released according to the RF command signal of the smart key even the smart key storage device that blocks the RF command signal of the smart key allows the RF command signal of the smart key to be recognized in the vehicle.

### SUMMARY

According to an aspect of the present invention, there is provided a car sharing smart key storage system comprising :a car sharing main system that is located inside a vehicle and generates/transmits a command signal necessary for car sharing user authentication and car sharing operation; a smart key storage device for transmitting/receiving signals related to an operation of a smart key in the car sharing main system, storing the smart key, operating the smart key according to the operation mechanism, and blocking a Radio Frequency (RF) command signal transmitted from the smart key; a signal re-radiation device located close to the smart key storage device and re-radiating a RF signal transmitted from the smart key storage device and a Low Frequency (LF) signal transmitted from the vehicle.

In an embodiment of the present disclosure, the smart key storage device includes a smart key fixing part that passes the RF command signal from the smart key that places the smart key in a fixed position, a servo control unit including a button click mechanism for clicking a button of the smart key, a signal sensing unit for detecting the RF command signal transmitted from the smart key and detecting the LF signal transmitted from the vehicle, a switching unit for blocking/passing the detection signal from the signal sensing unit, a control unit for controlling the servo control unit of the smart key storage device to pass the RF command signal generated by clicking the button of the smart key if the user is authorized as a result of user authentication in the car sharing main system, and for controlling the switch unit of the smart key storage device to block the RF command signal from the smart key if the user is not an authorized as a result of user authentication in the car sharing main system.

In an embodiment of the present disclosure, the smart key storage device is configured as a box type shielded with a metallic material such as an aluminum plate or a stainless-steel plate.

In an embodiment of the present disclosure, the servo control unit of the smart key storage device uses a Radio Control (RC) servo motor, and the part for executing the button click mechanism is siliconized so that excessive shock does not happen to the button part of the smart key.

In an embodiment of the present disclosure, the switch unit of the smart key storage device includes a band filter suitable for the LF/RF signal, and an amplifier for amplifying each transmitted/received signal.

In an embodiment of the present disclosure, the signal re-radiation device is configured with one or more antennas to re-radiate the RF command signal from the smart key storage device and the LF signal from the vehicle.

According to a preferred embodiment of the present invention, there is provided a method of controlling the car sharing smart key storage system. In a car sharing smart key storage system including a car sharing main system a car sharing main system that is located inside a vehicle and generates/transmits a command signal necessary for car sharing user authentication and car sharing operation, a smart key storage device for transmitting/receiving signals related to an operation of a smart key in the car sharing main system, storing the smart key, operating the smart key according to the operation mechanism, and blocking a Radio Frequency (RF) command signal transmitted from the smart key, a signal re-radiation device located close to the smart key storage device and re-radiating a RF signal transmitted from the smart key storage device and a Low Frequency (LF) signal transmitted from the vehicle, a method of controlling the car sharing smart key storage system comprising: a step of operating the control unit of the smart key storage device so that the switch unit to shield a periodic RF command signal of the smart key until a command is received from the car sharing main system; a step of performing authentication for a user in the car sharing main system; a step of transmitting a RF command signal to the control unit of the smart key storage device as a result of the user authentication when the user is an authorized user; a step of operating a servo control unit to click a smart key button using a button claim mechanism after receiving the RF command control signal; a step of recognizing that the RF command signal generated due to the operation of the button of the smart device in the signal sensing unit; a step of operating a switch unit in the control unit for the recognized RF command signal, passing through the smart key storage device and transmitting the RF command signal to the signal re-radiation unit; a step of controlling the vehicle by re-radiating the transmitted RF command signal in the signal radiating device.

In an embodiment of the present disclosure, the method of controlling the car sharing smart key storage system of claim further comprising: a step of transmitting a shielding command signal in the smart key storage device of the car sharing main system so that the RF command signal of the smart key is shielded when the user is not an authorized user as a result of the user authentication; a step of operating the switch unit in the control unit of the smart key storage device in accordance with the transmitted the shielding command signal to shield the RF command signal of the smart key.

The effect of the invention is that the vehicle can be controlled through the smart key storage system of the car sharing vehicle of the present invention without disassembling the vehicle's smart key and changing the in-vehicle control system.

In addition, it is a method that completely blocks communication for recognizing the in-vehicle smart key and allows communication between the vehicle and the smart key is required. Therefore, in case of an unauthorized car sharing user, the door lock is not released due to the RF signal of the smart key in a situation where the smart key is stored inside the vehicle, and in case of an authorized car sharing user, the door lock may be released normally.

However, the effects of the present invention may not be limited to the above effects, and may be variously expanded without departing from the sprit and scope of the present invention.

### BRIEF DESCRIPTION OF THE DRAWINGS

FIG. 1 is a schematic configuration diagram of a smart key storage system of a car sharing vehicle according to an embodiment of the present invention.
FIG. 2 is an internal configuration diagram of a smart key storage device in the smart key storage system of a car sharing vehicle.
FIG. 3 is a perspective view schematically illustrating the exterior of the smart key storage system of the car-sharing vehicle.
FIG. 4 is a flowchart of a control method of the smart key storage system of the carsharing vehicle.

### DETAILED DESCRIPTION OF THE EMBODIMENTS

Hereinafter, preferred embodiments of the present invention will be described in more detail with reference to the drawings.

Since the present invention can have various changes and can have various forms, specific embodiments are illustrated in the drawings and described in detail in the specification. However, this is not intended to limit the present invention to the specific disclosed form, it should be understood to include all modifications, equivalents and substitutes included in the spirit and scope of the present invention.

The terms used in the present application are only used to describe specific embodiments, and are not intended to limit the present invention. The singular expression includes the plural expression unless the context clearly dictates otherwise. In the present application, terms such as "comprise" or "have" are intended to designate that a feature, number, step, operation, component, part, or combination thereof described in the specification, but one or more features to be understood that it does not preclude the possibility of the presence or addition of numbers, steps, operations, components, parts, or combinations thereof.

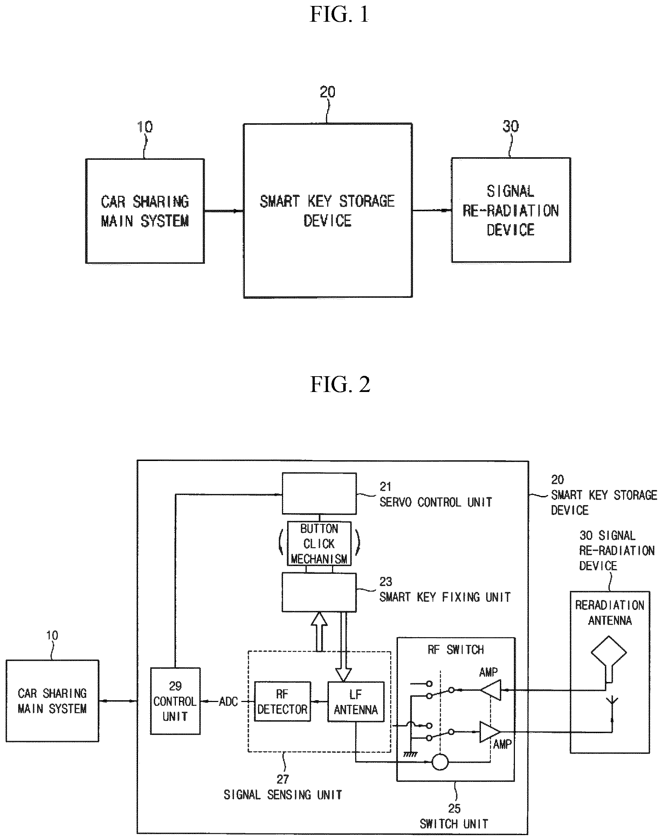

FIG. 1 is a schematic configuration diagram of a smart key storage system 1 of a car sharing vehicle according to an embodiment of the present invention.

Referring to FIG.1, the smart key storage system 1 of the car sharing vehicle according to an embodiment for realizing the object of the present invention may include a car sharing main system 10, a smart key storage device 20, and a signal re-radiation device 30.

The car sharing main system 10 may be located inside the vehicle and serve to generate and transmit a command signal required for car sharing user authentication and car sharing operation.

The smart key storage device 20 may transmit and receive signals related to the operation of the smart key in the car sharing main system 10, store the smart key, operate the smart key in accordance with the operation mechanism, and block an RF command signal transmitted from the smart key.

The signal re-radiation device 30 may be located near the smart key storage device and re-radiate the Radio Frequency (RF) signal transmitted from the smart key storage device 20 and the Low Frequency (LF) signal transmitted from the vehicle to the smart key storage device 20.

The smart key storage device 20 may be configured as a box type shielded with a metallic material such as an aluminum plate or a stainless-steel plate.

FIG. 2 is an internal configuration diagram of the smart key storage device 20 of the smart key storage system 1 of the car sharing vehicle.

The smart key storage device 20 may include a servo control unit 21, a smart key fixing unit 23, a switch unit 25, a signal sensing unit 27, and a control unit 29.

The smart key fixing unit 23 may be located the smart key in a fixed position and pass the RF command signal from the smart key.

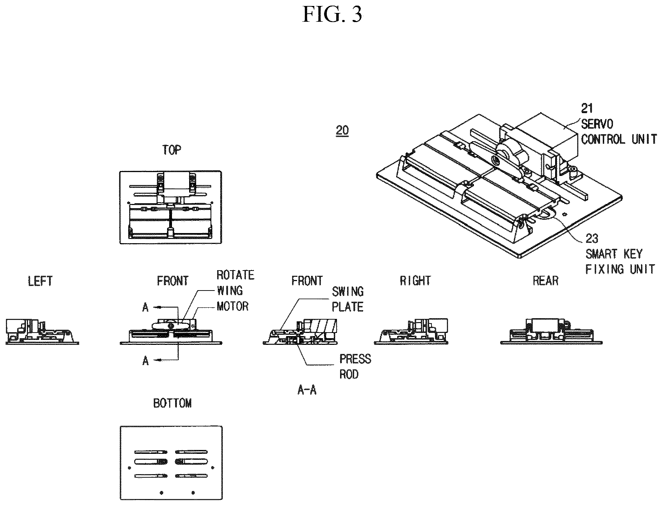

The servo control unit 21 may include a button click mechanism for clicking the button of the smart key. Components of the button click mechanism and an implementation method will be described in detail with reference to FIG. 3.

The signal sensing unit 27 may detect the RF command signal from the smart key and detect the LF signal from the vehicles antenna.

The switch unit 25 may serve to block and pass the sensing signal of the signal sensing unit 27.

The control unit 29 may control the servo control unit 21 of the smart key storage device 20 when the smart key usage right is generated as a result of user authentication in the car sharing main system 10 to operate the smart key.

In addition, if the smart key usage right is not generated as a result of user authentication in the car sharing main system 10, the RF command signal of the smart key is blocked by controlling the switch unit 25 of the smart key storage device 20.

In an exemplary example, the servo control unit 21 of the smart key storage device 20 may use an RC servo motor, and the part for executing the button click mechanism may be siliconized so that excessive shock does not happen to the button part of the smart key.

In an exemplary example, the switch unit 25 of the smart key storage device 20 may include a band filter suitable for the LF/RF signal, and an amplifier for amplifying each transmitted/received signal.

In an exemplary example, the signal re-radiation device 30 may be configured with one or more antennas to re-radiate the RF command signal of the smart key storage device and the LF signal, which is a signal in the vehicle.

FIG. 3 is a perspective view schematically showing the exterior of the smart key storage device 20 of the car sharing vehicle.

FIG. 3 corresponds to a perspective view showing the Top, Bottom, Left, Front, A-A section, Right and Rear of the smart key storage device 20.

The Radio Control (RC) servo motor and rotate wing, swing plate and press rod specified in the drawings may correspond to actual devices for executing the button click mechanism.

The rotate wing mounted on the RC servo motor shaft corresponding to the servo control unit 21 of the smart key storage device may serve to press the swing plate located in the rotation direction of the servo motor.

When this swing plate is pressed, the button of the smart key contained in the smart key fixing part 23 located at the bottom may be pressed. Since the position of the button is different for each smart key, the position of the press rod fixed to the rail of the swing plate may be movable according to the position of the button.

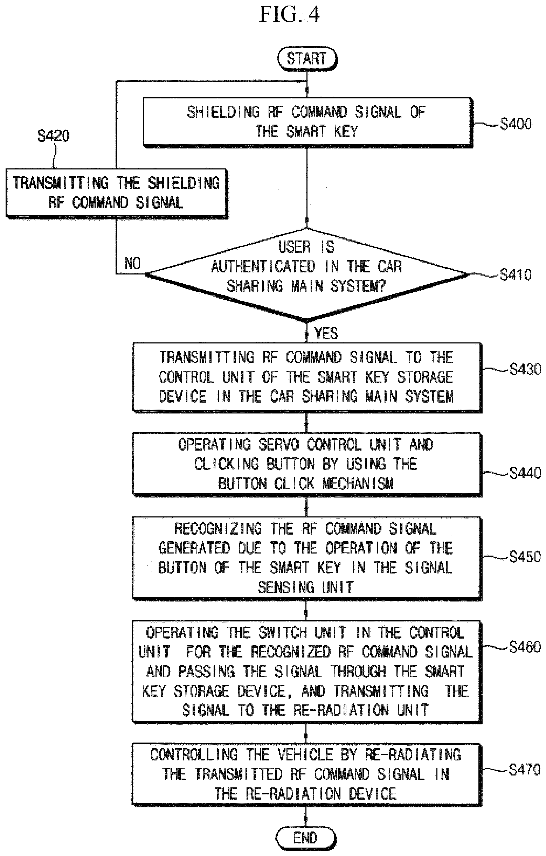

FIG. 4 is a flowchart for a control method of the smart key storage system of the car sharing vehicle.

The operation of the car sharing smart key storage system 1 may perform with a car sharing main system 10 that is located inside the vehicle and generates and transmits a command signal required for car sharing user authentication and car sharing operation, a smart key storage device 20 for transmitting and receiving signals related to the operation of the smart key in the car sharing system 1, storing the smart key, and operating the smart key according to the operation mechanism and a signal re-radiation device 30 positioned close to the smart key storage device and re-radiating the RF command signal transmitted from the smart key and the LF signal transmitted from the vehicle.

Until a RF command signal is received from the car sharing main system 10, the control unit 29 of the smart key storage device 20 may operate the switch unit 25 to shield the periodic RF command signal of the smart key (S400).

The car sharing main system 10 may perform authentication for a user who wants to use car sharing (S410)

As a result of the user authentication, if the user is an authorized user, the car sharing main system 10 may transmit a vehicle control command to the controller 29 of the smart key storage device 20 (S430)

After receiving the vehicle control command from the control unit 29, the servo control unit may be operated to click the smart key button using the button click mechanism. (S 440)

The signal sensing unit 27 may recognize that a RF command signal generated due to the operation of the button of the smart device (S450)

The control unit 29 may operate the switch unit 25 for the recognized RF command signal, to pass through the smart key storage and operation unit 20, and transmit it to the signal re-radiation unit 30 (S460).

By re-radiating the transmitted the RF command signal in the signal re-radiation device 30, the vehicle may be controlled (S470).

As a result of performing authentication for the user who wants to use car sharing in the car sharing main system 10, when the user is not an authorized user, the smart key storage device 20 in the car sharing main system 10 may transmit a shielding command so that the RF command signal of the smart key is shielded (S420).

It may further include the step of operating the switch unit 25 in the control unit 29 of the smart key storage device in accordance with the transmitted the shielding command to shield the RF command signal of the smart key (S400).

As described above, the present invention has been described with respect to particularly preferred embodiments. However, the present invention is not limited to the above embodiments, and it is possible for one who has an ordinary skill in the art to make various modifications and variations, without departing off the spirit of the present invention.

## Claims

1. A car sharing smart key storage system comprising:
a car sharing main system that is located inside a vehicle and generates/transmits a command signal necessary for car sharing user authentication and car sharing operation;
a smart key storage device for transmitting/receiving signals related to an operation of a smart key in the car sharing main system, storing the smart key, operating the smart key according to the operation mechanism, and blocking a Radio Frequency (RF) command signal transmitted from the smart key;
a signal re-radiation device located close to the smart key storage device and re-radiating a RF signal transmitted from the smart key storage device and a Low Frequency (LF) signal transmitted from the vehicle.

2. The car sharing smart key storage system of claim 1, wherein the smart key storage device includes a smart key fixing part that passes the RF command signal from the smart key that places the smart key in a fixed position, a servo control unit including a button click mechanism for clicking a button of the smart key, a signal sensing unit for detecting the RF command signal transmitted from the smart key and detecting the LF signal transmitted from the vehicle, a switching unit for blocking/passing the detection signal from the signal sensing unit, a control unit for controlling the servo control unit of the smart key storage device to pass the RF command signal generated by clicking the button of the smart key if the user is authorized as a result of user authentication in the car sharing main system, and for controlling the switch unit of the smart key storage device to block the RF command signal from the smart key if the user is not an authorized as a result of user authentication in the car sharing main system.

3. The car sharing smart key storage system of claim 2, wherein the smart key storage device is configured as a box type shielded with a metallic material such as an aluminum plate or a stainless-steel plate.

4. The car sharing smart key storage system of claim 2, wherein the servo control unit of the smart key storage device uses a Radio Control (RC) servo motor, and the part for executing the button click mechanism is siliconized so that excessive shock does not happen to the button part of the smart key.

5. The car sharing smart key storage system of claim 2, wherein the switch unit of the smart key storage device includes a band filter suitable for the LF/RF signal, and an amplifier for amplifying each transmitted/received signal.

6. The car sharing smart key storage system of claim 1, wherein the signal re-radiation device is configured with one or more antennas to re-radiate the RF command signal from the smart key storage device and the LF signal from the vehicle.

7. In a car sharing smart key storage system including a car sharing main system a car sharing main system that is located inside a vehicle and generates/transmits a command signal necessary for car sharing user authentication and car sharing operation, a smart key storage device for transmitting/receiving signals related to an operation of a smart key in the car sharing main system, storing the smart key, operating the smart key according to the operation mechanism, and blocking a Radio Frequency (RF) command signal transmitted from the smart key, a signal re-radiation device located close to the smart key storage device and re-radiating a RF signal transmitted from the smart key storage device and a Low Frequency (LF) signal transmitted from the vehicle.
a method of controlling the car sharing smart key storage system comprising:
a step of operating the control unit of the smart key storage device so that the switch unit to shield a periodic RF command signal of the smart key until a command is received from the car sharing main system;
a step of performing authentication for a user in the car sharing main system;
a step of transmitting a RF command signal to the control unit of the smart key storage device as a result of the user authentication when the user is an authorized user;
a step of operating a servo control unit to click a smart key button using a button claim mechanism after receiving the RF command control signal;
a step of recognizing that the RF command signal generated due to the operation of the button of the smart device in the signal sensing unit;
a step of operating a switch unit in the control unit for the recognized RF command signal, passing through the smart key storage device and transmitting the RF command signal to the signal re-radiation unit;
a step of controlling the vehicle by re-radiating the transmitted RF command signal in the signal radiating device.

8. The method of controlling the car sharing smart key storage system of claim 7, further comprising:
a step of transmitting a shielding command signal in the smart key storage device of the car sharing main system so that the RF command signal of the smart key is shielded when the user is not an authorized user as a result of the user authentication;
a step of operating the switch unit in the control unit of the smart key storage device in accordance with the transmitted the shielding command signal to shield the RF command signal of the smart key.
